# EUROPÄISCHE PATENTANMELDUNG

(11) **EP 4 589 171 A1**
(43) Veröffentlichungstag der Anmeldung: **23.07.2025**
(21) Anmeldenummer: 25151078.0
(22) Anmeldetag: 10.01.2025
(51) Int. Cl.: F16H 37/04, F16H 3/72, H02K 7/116

(54) **GETRIEBEANORDNUNG UND LANDWIRTSCHAFTLICHES ZUGFAHRZEUG**

(30) Priorität: 17.01.2024 DE 102024101309; 17.01.2024 DE 102024101325
(71) Anmelder: Deere & Company, Moline, IL 61265 (US)
(72) Erfinder: Lang, Matthias, Mannheim (DE); Gugel, Rainer, Mannheim (DE); Mueller, David, Mannheim (DE)
(74) Vertreter: Stein, Stefan

(57) **Zusammenfassung**

Die Erfindung betrifft eine Getriebeanordnung (30) für einen Antriebsstrang (20) eines landwirtschaftlichen Zugfahrzeugs (10) mit einer Getriebeeinrichtung (40) und einer im Leistungsfluss nachgelagerten Getriebeeinheit (80), welche zwei Kupplungen (82, 84) mit zwei Getriebeeingangswellen (86, 88) aufweist. Die Getriebeeinrichtung (40) umfasst einen mechanischen Getriebezweig (64) und einen variablen Getriebezweig (66) mit einer magnetisch-elektrischen Umlaufgetriebestufe (58) aufweisend einen inneren Rotor (60), einen äußeren Stator (56) und dazwischen einen rotierbaren Modulationsring (62). Elektrische Leistung einer mit der Eingangswelle (44) gekoppelten Elektromaschine (52) ist an den Stator (56) der Umlaufgetriebestufe (58) übertragbar. Der Stator (56) ist zur Erzielung einer Rotation des Modulationsringes (62) ansteuerbar. Zwischen dem Modulationsring (62) und den beiden Getriebeeingangswellen (86, 88) ist eine Koppeleinrichtung (180) mit einem Planetengetriebe (182) angeordnet derart, dass der Modulationsring (62) mit einem Planetenradträger (186) drehfest verbunden ist, dass ein erstes Sonnenrad (190) des Planetengetriebes (182) mit dem Rotor (60) drehfest verbunden ist und dass ein zweites Sonnenrad (188) des Planetengetriebes (182) mit der Eingangsseite (92) beider Kupplungen (82, 84) drehfest verbunden ist. Die Erfindung betrifft weiter ein landwirtschaftliches Zugfahrzeug (10), umfassend eine solche Getriebeanordnung (30).

## Beschreibung

Die Erfindung betrifft eine Getriebeanordnung gemäß dem Oberbegriff des unabhängigen Anspruchs 1 und ein landwirtschaftliches Zugfahrzeug gemäß dem Oberbegriff des unabhängigen Anspruchs 15.

Seit langem kommen in landwirtschaftlichen Zugfahrzeugen Getriebeanordnungen zum Einsatz, um den Vortrieb des Zugfahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Die Getriebeanordnung kann dabei insbesondere eine unter Last schaltbare Getriebeanordnung sein. Eine bekannte Maßnahme ist es, die Anzahl Gangstufen einer Getriebeanordnung zu erhöhen, indem diese eine Kombination von Getrieben umfasst, beispielsweise durch Kombination einer Getriebeeinrichtung mit einer Getriebeeinheit. Die DE 10 2013 110 709 A1 offenbart eine solche Getriebeanordnung. Die dabei verwendeten Getriebeeinheiten wiederum können aus der WO 2009/050078 A2 als Doppelkupplungsgetriebe bekannt sein.

Alternativ kann die Getriebeanordnung mit einem Stufenlosgetriebe ausgestattet sein. Stufenlosgetriebe werden leistungsverzweigt mit einem variablen hydraulischen Pfad realisiert. Hierbei wird eingangsseitig ein Teil der Antriebsleistung in hydraulische Leistung umgewandelt. Mittels Variatoren kann der Anteil der hydraulischen Leistung variiert werden. Ausgangsseitig wird die hydraulische Energie wieder in mechanische Energie umgewandelt. Die konstruktive Ausgestaltung dieser Stufenlosgetriebe ist teilweise mit einer hohen Komplexität, Trägheit und störender Geräuschentwicklung verbunden.

Ausgehend von diesem Stand der Technik ist es daher Aufgabe der vorliegenden Erfindung, eine Getriebeanordnung und ein landwirtschaftliches Zugfahrzeug vorzuschlagen, welche die aus dem Stand der Technik bekannten Nachteile weitgehend vermeiden und konstruktiv einfacher sowie effizienter ausgestaltet sind.

Diese Aufgabe wird durch eine Getriebeanordnung mit den Merkmalen des Patentanspruchs 1 und ein landwirtschaftliches Zugfahrzeug mit den Merkmalen des Anspruchs 15 gelöst. Die abhängigen Ansprüche beziehen sich auf besonders vorteilhafte Ausführungsformen der Erfindung.

Gemäß Anspruch 1 wird eine Getriebeanordnung für einen Antriebsstrang eines landwirtschaftlichen Zugfahrzeugs vorgeschlagen, bevorzugt ein Traktor oder Schlepper. Die Getriebeanordnung umfasst eine Eingangswelle, eine Ausgangswelle, eine Getriebeeinrichtung und eine im Leistungsfluss nachgelagerte Getriebeeinheit. Die Getriebeeinheit weist zwei Kupplungen mit antreibbarer Eingangsseite auf. Die erste Kupplung ist mit einer ersten Getriebeeingangswelle drehfest verbunden, während die zweite Kupplung mit einer zweiten Getriebeeingangswelle drehfest verbunden ist. Die Getriebeeinrichtung umfasst einen mechanischen Getriebezweig und einen variablen Getriebezweig mit einer magnetisch-elektrischen Umlaufgetriebestufe. Die Umlaufgetriebestufe weist einen inneren Rotor, einen äußeren Stator und dazwischen einen rotierbaren Modulationsring auf. Der Modulationsring kann nicht-magnetische und ferromagnetische Segmente umfassen, die insbesondere abwechselnd angeordnet sein können. Ebenso kann der Modulationsring magnetisch sein. Durch eine mit der Eingangswelle gekoppelte Elektromaschine wird elektrische Leistung erzeugt, welche teilweise oder vollständig an den Stator der Umlaufgetriebestufe übertragbar ist. Dabei ist der Stator der Umlaufgetriebestufe zur Erzielung einer Rotation des Modulationsringes ansteuerbar. Zwischen dem Modulationsring und der Eingangsseite der beiden Kupplungen ist eine Koppeleinrichtung mit einem Planetengetriebe angeordnet. Dabei ist ein Planetenradträger der Koppeleinrichtung mit dem Modulationsring drehfest verbunden. Ein erstes Sonnenrad des Planetengetriebes der Koppeleinrichtung ist mit dem inneren Rotor drehfest verbunden, während ein zweites Sonnenrad des Planetengetriebes der Koppeleinrichtung mit der Eingangsseite beider Kupplungen drehfest verbunden ist. Dabei wirkt diese drehfeste Verbindung zwischen dem zweiten Sonnenrad und der Eingangsseite beider Kupplungen als ein einziger Ausgang der Koppeleinrichtung im Leistungsfluss hin zur Getriebeeinheit.

Die erfindungsgemäße Getriebeanordnung kombiniert in effizienter und kostenoptimierter Weise ein elektrisch leistungsverzweigtes Stufenlosgetriebe mit einer im Leistungsfluss nachgelagerten Getriebeeinheit unter Zwischenschaltung einer Koppeleinrichtung mit einem Planetengetriebe. Dabei können der Modulationsring und der innere Rotor vorteilhaft als zwei Koppeleingänge für die Koppeleinrichtung wirken.

Der rotierbare Modulationsring bietet die Möglichkeit, unterschiedliche Drehzahlen zur Übertragung an die nachgelagerte Getriebeeinheit zu generieren, ohne dass hierbei nennenswerte physikalische Trägheitsmomente auftreten. Hierdurch können die Schaltvorgänge vorteilhaft deutlich verkürzt werden und die Regelbarkeit der Getriebeanordnung ist signifikant verbessert.

Die drehzahlbezogene Einstellung des Modulationsringes erfolgt durch seine rotierbare Lage zwischen dem inneren Rotor und dem äußeren Stator. Um den Modulationsring technisch einfach auf unterschiedliche Drehzahlen einzustellen, wird eine variable elektrische Leistung an den äußeren Stator übertragen. Hierbei kann der äußere Stator mit mindestens einer Statorwicklung ausgestattet sein, deren Erregerfrequenz änderbar bzw. umschaltbar ist. Somit ist der Stator mit unterschiedlichen Erregerfrequenzen ansteuerbar.

Die elektrische Leistung wird von der mit der Eingangswelle gekoppelten Elektromaschine generiert, welche zur Realisierung des elektrischen variablen Getriebezweiges beiträgt. Für eine stabile Generierung elektrischer Leistung kann die Elektromaschine mit der Eingangswelle in einem konstanten Drehzahlverhältnis stehen. Dies wird beispielsweise durch eine Kopplung mit mehreren Zahnrädern zwischen der Eingangswelle und der Elektromaschine erzielt. Alternativ kann ein Rotor der Elektromaschine mit der Eingangswelle drehfest verbunden sein und während des Antriebs der Eingangswelle - insbesondere durch einen Verbrennungsmotor - eine elektrische Leistung generieren.

Ein effizientes Ansprechverhalten des Modulationsringes kann über die Modulation eines elektromagnetischen Feldes zwischen dem inneren Rotor und dem äußeren Stator erfolgen. Hierzu kann der Modulationsring teilweise magnetisch, insbesondere mit nicht magnetischen und ferromagnetischen Segmenten, ausgebildet sein, die sich insbesondere abwechseln. Der Rotor ist insbesondere magnetisch ausgebildet und weist vorteilhaft eine Anzahl magnetischer Pole bzw. Polpaare auf. Der Stator hat vorzugsweise eine Anzahl elektrischer Pole bzw. Polpaare zur Aufnahme der übertragenen elektrischen Leistung.

Darüber hinaus ist der Stator der Umlaufgetriebestufe vorzugsweise derart ansteuerbar, dass der Modulationsring gesteuert in unterschiedliche Rotationsrichtungen rotierbar ist und folglich die Drehrichtung der Ausgangswelle unterschiedlich eingestellt werden kann. Insbesondere kann die Drehrichtung der Ausgangswelle entgegengesetzt zur Drehrichtung der Eingangswelle eingestellt werden. Ein ansonsten üblicher zusätzlicher Rückwärtsgang in der Getriebeanordnung, insbesondere in der Getriebeeinheit, kann hierdurch entfallen. Die Getriebeanordnung kann dann mit reduzierter Bauteilezahl kompakter und kostengünstiger hergestellt werden und benötigt geringeren Einbauraum sowie geringeren Wartungsaufwand.

Die Koppeleinrichtung kann als eine mechanische Umlaufgetriebestufe betrachtet werden, welche durch ihre drehfeste Verbindung mit der Eingangsseite beider Kupplungen der Getriebeeinheit nur einen einzigen Ausgang benötigt. Die Koppeleinrichtung kann im Leistungsfluss zwischen dem Modulationsring und der Ausgangswelle die Funktionalität der Getriebeanordnung effizient unterstützen. Das kinetische Verhalten der Koppeleinrichtung ermöglicht es, das an der magnetisch-elektrischen Umlaufgetriebestufe erforderliche Drehmoment signifikant zu reduzieren. Das reduzierte Drehmoment erlaubt eine kleinere Dimensionierung der magnetisch-elektrischen Umlaufgetriebestufe, so dass die gesamte Getriebeanordnung entsprechend raumsparender aufgebaut sein kann. Außerdem kann die Koppeleinrichtung eine Drehrichtungsumkehr zwischen der Eingangswelle und der Ausgangswelle unterstützen. Darüber hinaus erleichtert der Aufbau der Koppeleinrichtung eine stufenlose Drehzahlverstellung. Beispielsweise kann die Ausgangsdrehzahl der Getriebeanordnung bei konstanter Drehzahl der Eingangswelle technisch einfach variiert werden.

Vorzugsweise sind das erste Sonnenrad des Planetengetriebes und der innere Rotor miteinander drehfest verbunden, indem sie an einer Welle drehfest angeordnet sind. Die Welle ist insbesondere als eine Hohlwelle ausgebildet, welche die Eingangswelle bzw. eine Verlängerung der Eingangswelle mit Abstand umgibt.

Weiter vorzugsweise trägt der mit dem Modulationsring drehfest verbundene Planetenradträger Planetenräder des Planetengetriebes der Koppeleinrichtung.

Die Eingangsseite beider Kupplungen der Getriebeeinheit weist vorzugsweise eine Kupplungsantriebswelle auf, welche die beiden Kupplungen antreibt. Die Kupplungsantriebswelle kann als eine Hohlwelle ausgebildet sein. Für einen effizienten Kraft- und Leistungsfluss ist insbesondere eine drehfeste Verbindung zwischen der Kupplungsantriebswelle und dem zweiten Sonnenrad des Planetengetriebes vorgesehen.

Beim Schalten können die Kupplungen verwendet werden, um die entsprechende Getriebeeingangswelle der Getriebeeinheit auf die neue Drehzahl zu bringen. Die Kupplungen können jeweils als lastschaltbare Kupplung, bevorzugt als Lamellenkupplung (oder als trockene Einscheibenkupplung), besonders bevorzugt als Reibkupplung ausgebildet sein. Die Kupplungen können aber auch als nicht-lastschaltbare Kupplungen ausgebildet sein.

Abtriebsseitig kann der Getriebeeinheit die Ausgangswelle zugeordnet sein. Die Getriebeeinheit kann eingangsseitig die beiden vorgenannten Kupplungen aufweisen. Die der ersten Getriebeeingangswelle zugeordnete Kupplung kann als eine erste Kupplung bezeichnet werden. Die der zweiten Getriebeeingangswelle zugeordnete Kupplung kann als eine zweite Kupplung bezeichnet werden.

Die erste Kupplung ist insbesondere derart ausgebildet, dass sie zwischen einem geöffneten Zustand, in dem das zweite Sonnenrad des Planetengetriebes der Koppeleinrichtung von der ersten Getriebeeingangswelle antriebsmäßig gelöst ist, und einem geschlossenen Zustand beweglich und/oder schaltbar ist, in dem das zweite Sonnenrad des Planetengetriebes mit der ersten Getriebeeingangswelle in Antriebsverbindung steht. Die zweite Kupplung ist insbesondere derart ausgebildet, dass sie zwischen einem geöffneten Zustand, in dem das zweite Sonnenrad des Planetengetriebes von der zweiten Getriebeeingangswelle antriebsmäßig gelöst ist, und einem geschlossenen Zustand beweglich und/oder schaltbar ist, in dem dieses zweite Sonnenrad mit der zweiten Getriebeeingangswelle in Antriebsverbindung steht. Die erste und/oder zweite Getriebeeingangswelle können mit der Ausgangswelle in Antriebsverbindung gebracht werden. Die erste und/oder zweite Getriebeeingangswelle können als Hohlwellen ausgebildet sein. Außerdem können die erste und/oder zweite Getriebeeingangswelle zueinander koaxial und/oder ineinander, insbesondere frei drehbar ineinander, angeordnet sein. Die Getriebeeinheit kann eine oder mehrere Luftdruckabdichtungen umfassen, die in die Ausgangswelle und/oder die erste und/oder zweite Getriebeeingangswelle integriert sein können.

In einer bevorzugten Ausführungsform ist zur Übertragung der elektrischen Leistung an den Stator und zu dessen Ansteuerung eine Getriebesteuereinheit vorgesehen. Die Getriebesteuereinheit kann als ein elektronisches Modul mit einer Leistungselektronik ausgebildet sein. Die Steuereinheit kann eine Recheneinheit, einen Computer, einen Prozessor, einen Speicher und/oder alle Software, Hardware, Algorithmen, Anschlüsse, insbesondere auch Sensoren, umfassen, die für die Ansteuerung des Stators der magnetisch-elektrischen Umlaufgetriebestufe und somit auch für die Steuerung und/oder Regelung des Modulationsringes erforderlich sind. Die Getriebesteuereinheit kann jedes Gerät umfassen, das Daten von verschiedenen Sensoren analysieren, Daten vergleichen und die erforderlichen Entscheidungen treffen kann, um den Betrieb der Getriebeanordnung zu steuern und/oder zu regeln und/oder auszuführen.

Die Getriebesteuereinheit sorgt dafür, dass die von der Elektromaschine generierte elektrische Energie bzw. Leistung in der erforderlichen Weise an den Stator, insbesondere dessen Statorwicklungen, abgegeben wird. Hierbei kann die Getriebesteuereinheit mit einer Leistungselektronik und/oder einem Energiespeicher gekoppelt sein. Die Leistungselektronik und/oder der Energiespeicher kann/können in der Getriebesteuereinheit integriert sein oder als externe Einheit(en) von der Getriebesteuereinheit ansteuerbar sein. Alternativ kann auch eine Batterieeinheit zur Speicherung der von der Elektromaschine generierten elektrischen Energie vorgesehen sein, wobei diese Batterieeinheit von einer geeigneten Steuerelektronik ansteuerbar ist, um elektrische Leistung zu speichern und/oder an den Stator abzugeben.

Weiterhin kann die Getriebesteuereinheit mit weiteren Funktionseinheiten oder Bauteilen der Getriebeanordnung oder des Zugfahrzeugs verbunden sein, bevorzugt signalverbunden und/oder signalübertragend und/oder datenleitend verbunden sein. Die Steuereinheit kann zur Steuerung und/oder Regelung und/oder Ansteuerung der miteinander verbundenen Funktionseinheiten oder Bauteile dienen. Unter einer signalverbundenen und/oder signalübertragenden und/oder datenleitenden Verbindung ist dabei zu verstehen, dass ein Austausch von Signalen zwischen den verbundenen Bauteilen stattfindet. Die Verbindung kann kabelgebunden, insbesondere also mit Kabel, und/oder kabellos, also per Funk, beispielsweise mit Bluetooth realisiert sein. Die Getriebesteuereinheit ist vorzugsweise an einen Kommunikationsbus angeschlossen. Der Kommunikationsbus kann beispielsweise ein Isobus, CAN-Bus oder ähnliches sein. Außerdem kann mit der Getriebesteuereinheit eine weitere Steuereinheit steuerbar und/oder regelbar sein.

Die Getriebesteuereinheit kann dem Zugfahrzeug zugeordnet, insbesondere am Zugfahrzeug angeordnet sein. Die Getriebesteuereinheit kann aber auch der Getriebeanordnung zugeordnet sein oder die Getriebeanordnung die Getriebesteuereinheit umfassen. Die Getriebesteuereinheit kann auch zweiteilig beispielsweise als Teil des Zugfahrzeugs und als Teil der Getriebeanordnung ausgebildet sein. Die Getriebesteuereinheit kann unmittelbar mit der in einer Kabine des Zugfahrzeugs angeordneten Ein- und Ausgabeeinheit Verbindung stehen, durch welche von einer Bedienperson eingegebene Daten an die Getriebesteuereinheit übertragen oder von dieser empfangen und ausgegeben werden können. Denkbar ist aber auch, dass die Getriebesteuereinheit mittelbar durch eine übergeordnete Steuereinheit mit der Ein- und Ausgabeeinheit verbunden ist.

In der Getriebesteuereinheit werden Signale bzw. Daten verarbeitet. Zumindest teilweise dienen die verarbeiteten Signale bzw. Daten zur erforderlichen Ansteuerung des Stators bzw. der Statorwicklungen. Insbesondere sind die Statorwicklungen als eine oder mehrere Erregerspule(n) wirksam.

Vorzugsweise weist die Getriebeeinheit einen Rückwärtsgang auf. Hierdurch enthält die Getriebeanordnung einen zusätzlichen Rückwärtsgang, insbesondere falls die Möglichkeit eines Rückwärtsbetriebs durch eine entsprechende Ansteuerung des Stators und unterschiedliche Rotationsrichtungen des Modulationsringes nicht gegeben oder nicht ausreichend sein sollte. Eine Integration des Rückwärtsganges in die Getriebeeinheit erleichtert deren Kompatibilität mit der leistungsverzweigten Getriebeeinrichtung.

In einer bevorzugten Ausführungsform ist eine Getriebestufe zur Drehrichtungsumkehr außerhalb der Getriebeeinheit vorgesehen. Diese Alternative zu einem Rückwärtsgang in der Getriebeeinheit reduziert vorteilhaft die Komplexität der Getriebeeinheit. Vorzugsweise ist die Getriebestufe zur Drehrichtungsumkehr zwischen der Eingangswelle und der magnetisch-elektrischen Umlaufgetriebestufe angeordnet. Die Getriebestufe zur Drehrichtungsumkehr ermöglicht es, einen Vorwärts- und Rückwärtsbetrieb bereitzustellen, ohne dass unterschiedliche Rotationsrichtungen des Modulationsringes realisiert werden müssen.

In einer vorteilhaften Weiterbildung der Erfindung weist die Getriebestufe zur Drehrichtungsumkehr ein Planetengetriebe auf. Die Funktionalität der Drehrichtungsumkehr kann somit in einer kompakten Bauweise bereitgestellt und besonders geräuscharm gestaltet werden. Vorzugsweise wird die Drehrichtungsumkehr am Ausgang bzw. Abtrieb des Planetengetriebes, also insbesondere dessen Sonnenrad, durch eine entsprechende Ansteuerung einer oder mehrerer auf das Planetengetriebe einwirkenden Bremsvorrichtung(en) unterstützt.

In Ausgestaltung der Erfindung weist die Getriebestufe zur Drehrichtungsumkehr eine dem Planetengetriebe vorgelagerte Kupplungseinrichtung auf. Letztere ermöglicht eine zuverlässige Kraft- und Momentenübertragung entlang des Leistungsflusses im Bereich der Getriebestufe zur Drehrichtungsumkehr. Hierbei weist die Kupplungseinrichtung abtriebsseitig vorzugsweise eine Welle auf, mit welcher ein Sonnenrad des Planetengetriebes bzw. Planetenradsatzes drehfest verbunden ist.

Die Kupplungseinrichtung kann als lastschaltbare Kupplung, bevorzugt als Lamellenkupplung (oder als trockene Einscheibenkupplung), besonders bevorzugt als Reibkupplung ausgebildet sein. Die Kupplungseinrichtung kann aber auch als nicht-lastschaltbare Kupplung ausgebildet sein.

In einer vorteilhaften Weiterbildung der Getriebeanordnung ist zwischen der Eingangswelle und der magnetisch-elektrischen Umlaufgetriebestufe ein Anfahrmodul zum elektrischen Anfahren angeordnet. Dieses Anfahrmodul ist zur wahlweisen Kopplung und Entkopplung einer Antriebsverbindung zwischen der Eingangswelle und/oder der Elektromaschine einerseits und der magnetisch-elektrischen Umlaufgetriebestufe (insbesondere deren Rotor) andererseits ausgebildet. Hierdurch kann der primäre Antrieb (z.B. über Verbrennungsmotor und die Eingangswelle) vom Abtrieb des Zugfahrzeugs vollständig entkoppelt werden. Dies ermöglicht ein rein elektrisches Anfahren über die magnetisch-elektrische Umlaufgetriebestufe, so dass ein hohes Drehmoment an den Abtrieb weitergeleitet werden kann. Vorteilhaft ist das insbesondere in solchen Fällen, in denen das Zugfahrzeug beim Anfahren, also bei geringer Fahrgeschwindigkeit, große Zugkräfte aufbringen muss.

Bei der vorgenannten Entkopplung der Antriebsverbindung kann der Antrieb (z.B. Verbrennungsmotor) der Eingangswelle im Stillstand sein. Alternativ kann der Antrieb (z.B. Verbrennungsmotor) der Eingangswelle in Betrieb sein, so dass beispielsweise weiterhin über die mit der Eingangswelle gekoppelte Elektromaschine Strom erzeugt werden kann.

In Ausgestaltung der Erfindung weist das Anfahrmodul eine Kupplungseinheit auf, welche antriebsseitig mit der Eingangswelle und/oder der Elektromaschine antriebsverbunden ist und abtriebsseitig über eine Rotorantriebswelle mit dem inneren Rotor der magnetisch-elektrischen Umlaufgetriebestufe drehfest verbunden ist. Dies unterstützt eine technisch stabile Kopplung und Entkopplung der Antriebsverbindung zwischen der Eingangswelle und/oder der Elektromaschine einerseits und der magnetisch-elektrischen Umlaufgetriebestufe (insbesondere deren Rotor) andererseits.

Die antriebsseitige Antriebsverbindung der vorgenannten Kupplungseinheit mit der Eingangswelle ist vorzugsweise drehfest ausgebildet. Die antriebsseitige Antriebsverbindung der vorgenannten Kupplungseinheit mit der Elektromaschine ist beispielsweise kraftschlüssig (z.B. Zahnradverbindung) ausgebildet.

Alternativ oder zusätzlich zu der vorgenannten Kupplungseinheit weist das Anfahrmodul vorzugsweise eine Kupplungseinheit auf, welche entlang des Leistungsflusses einerseits (z.B. antriebsseitig) über eine Rotorantriebswelle mit dem inneren Rotor der magnetisch-elektrischen Umlaufgetriebestufe drehfest verbunden ist und andererseits (z.B. abtriebsseitig) mit dem Modulationsring drehfest verbunden ist. Eine Kombination der zwei vorgenannten Kupplungseinheiten im Leistungsfluss unterstützt technisch einfach ein elektrisches Anfahren über die magnetisch-elektrische Umlaufgetriebestufe.

Die vorgenannten Kupplungseinheiten können jeweils als lastschaltbare Kupplung, bevorzugt als Lamellenkupplung (oder als trockene Einscheibenkupplung), besonders bevorzugt als Reibkupplung ausgebildet sein. Die Kupplungseinheiten können aber auch als nicht-lastschaltbare Kupplungen ausgebildet sein.

In einer besonders vorteilhaften Ausgestaltung ist die antriebsseitig mit der Eingangswelle und/oder der Elektromaschine antriebsverbundene Kupplungseinheit des Anfahrmoduls als die Kupplungseinrichtung der Getriebestufe zur Drehrichtungsumkehr wirksam. Hierbei ist die Getriebestufe zur Drehrichtungsumkehr zwischen der Eingangswelle und der magnetisch-elektrischen Umlaufgetriebestufe angeordnet. Diese Integration der Getriebestufe zur Drehrichtungsumkehr ermöglicht eine bauteile- und kostensparende Realisierung des Anfahrmoduls. So kann etwa eine ansonsten verwendete Kupplungseinheit des Anfahrmoduls eingespart werden. Die Kupplungseinrichtung der Getriebestufe zur Drehrichtungsumkehr unterstützt dann in einer zusätzlichen Funktion auch die Aufgabe des Anfahrmoduls.

In einer konstruktiv vorteilhaften Ausführungsform ist die Getriebeeinheit derart ausgestaltet, dass sie mindestens vier Radsätze zur Einrichtung von Gangstufen aufweist. An der ersten Getriebeeingangswelle und der zweiten Getriebeeingangswelle sind Festräder, beispielsweise Zahnräder, der Radsätze drehfest angeordnet.

Weiter vorzugsweise sind an der Ausgangswelle Schalträder, beispielsweise Zahnräder oder Gangzahnräder, der Radsätze drehbar gelagert. Die vorgenannten Festräder können insbesondere zumindest teilweise mit den Schalträdern in Eingriff stehen. Von den mindestens vier Radsätzen zur Einrichtung von Gangstufen, insbesondere Gruppengangstufen, weisen vorzugsweise ein erster Radsatz und ein zweiter Radsatz jeweils das Festrad an der ersten Getriebeeingangswelle und jeweils das Schaltrad an der Ausgangswelle auf. Weiter vorzugsweise weisen ein dritter Radsatz und ein vierter Radsatz jeweils das Festrad an der zweiten Getriebeeingangswelle und jeweils das Schaltrad an der Ausgangswelle auf.

Die erste Getriebeeingangswelle und/oder die zweite Getriebeeingangswelle kann/können achsparallel und/oder koaxial zueinander angeordnet sein.

Im Speziellen kann die Getriebeeinheit genau zwei Getriebeeingangswellen, die erste und zweite Getriebeeingangswelle, und genau eine Ausgangswelle umfassen. Außerdem kann die Getriebeeinheit genau vier Radsätze umfassen. Der erste Radsatz kann ein erstes Festrad der ersten Getriebeeingangswelle umfassen, das mit einem ersten Schaltrad der Ausgangswelle kämmt. Der zweite Radsatz kann ein zweites Festrad der ersten Getriebeeingangswelle umfassen, das mit einem zweiten Schaltrad der Ausgangswelle in Eingriff stehen kann. Der dritte Radsatz kann ein drittes Festrad der zweiten Getriebeeingangswelle umfassen, das mit einem dritten Schaltrad der Ausgangswelle kämmen kann. Der vierte Radsatz kann ein viertes Festrad der zweiten Getriebeeingangswelle umfassen, das mit dem Schaltrad, insbesondere einem vierten Schaltrad, der Ausgangswelle in Eingriff stehen kann.

In weiterer Ausgestaltung der Erfindung umfasst die Getriebeeinheit ein Schaltelement zum Koppeln zweier Schalträder, wobei das Schaltelement insbesondere drehbar auf der Ausgangswelle gelagert sein kann bzw. nicht drehfest mit der Ausgangswelle verbunden sein kann. Das Schaltrad des zweiten Radsatzes und das Schaltrad des dritten Radsatzes sind dabei mit dem Schaltelement derart koppelbar, bevorzugt derart selektiv koppelbar, dass über den zweiten und dritten Radsatz wenigstens eine Windungsgangstufe ausbildbar ist. Das Schaltrad des zweiten Radsatzes und das Schaltrad des dritten Radsatzes können dabei insbesondere in Verbindung mit dem ersten oder vierten Radsatz koppelbar sein, also insbesondere wenn auch der erste oder vierte Radsatz durch ein Koppelelement an der Ausgangswelle festgestellt sind. Mit anderen Worten, das Schaltrad des zweiten Radsatzes und das Schaltrad des dritten Radsatzes und das Schaltelement können derart auf der Ausgangswelle angeordnet sein, und insbesondere mittels des Schaltelements das Schaltrad des zweiten Radsatzes und das Schaltrad des dritten Radsatzes derart verbindbar und lösbar sein, dass zumindest eine Windungsgangstufe über das Schaltelement schaltbar ist. Der Leistungsfluss der Windungsgangstufe kann sich dabei über mindestens drei Radsätze mit miteinander kämmenden Festrädern und Schalträdern winden.

Falls eine Windungsgangstufe geschaltet wird, können zwei der Schalträder, also insbesondere das zweite und dritte Schaltrad, durch das Schaltelement drehfest miteinander verbunden und gleichzeitig der erste oder vierte Radsatz aktiviert sein, also gleichzeitig das erste Schaltrad durch ein erstes Koppelelement oder das vierte Schaltrad durch ein zweites Koppelelement mit der Ausgangswelle verbunden werden. Die Getriebeeinheit kann also im Speziellen sechs Gangstufen oder Gruppengangstufen umfassen, die insbesondere lastschaltbar sind. Die Getriebeeinheit kann also vier Gangstufen aufweisen, die nur über einen Radsatz schaltbar sind und zwei Gangstufen, die als Windungsgangstufen schaltbar sind. Zusätzlich können das zweite und dritte Schaltrad derart koppelbar sein, dass, insbesondere wenn auch der erste oder vierte Radsatz durch ein Koppelelement an der Ausgangswelle festgestellt sind, zwei weitere Gangstufen als Windungsgangstufen realisiert sein können. Bevorzugt können die erste und die sechste Gangstufe ein Windungsgang sein, also als Windungsgangstufe realisiert sein. Die Schrittgröße zwischen den einzelnen Gangstufen A bis F können konstant sein und/oder in einem Bereich von 1,2 bis 2,4, bevorzugt in einem Bereich von 1,46 bis 2,14 liegen, besonders bevorzugt 1,77 sein.

Die Getriebeeinheit umfasst insbesondere genau ein Schaltelement, insbesondere zum Koppeln der Schalträder des zweiten und dritten Radsatzes. Das Schaltelement kann dazu an der Ausgangswelle zwischen dem zweiten und dritten Radsatz angeordnet sein, und insbesondere auf der Ausgangswelle drehbar gelagert sein. Die zwei Schalträder können mit dem Schaltelement drehfest und lösbar verbindbar sein, wobei die zwei gekoppelten Schalträder insbesondere auf der Ausgangswelle drehbar und/oder lose angeordnet sein können. Dabei können die zwei drehbar gelagerten Schalträder des zweiten und dritten Radsatzes über das Schaltelement derart koppelbar sein, dass in Abhängigkeit von einem Schaltzustand des Schaltelements zwischen den zwei Schalträdern eine drehfeste Verbindung herstellbar ist, sodass die beiden Schalträder mit der gleichen Drehzahl drehbar sind. Mit anderen Worten, die zwei Schalträder können mit dem Schaltelement derart verbunden werden, dass die erste und zweite Getriebeeingangswelle in Abhängigkeit gebracht werden. Im Speziellen werden also bei einer Windungsgangstufe das Schaltrad des zweiten Radsatzes und das Schaltrad des dritten Radsatzes miteinander gekoppelt, um dadurch einen gemeinsamen Kraft- und Leistungsfluss durch die erste und zweite Getriebeeingangswelle zu realisieren.

Vorteilhafterweise werden mit der erläuterten Getriebeeinheit Windungsgangstufen realisiert. Aufgrund der Mehrfachnutzungen einzelner Radsätze sind Bauteileinsparungen beim konstruktiven Aufbau der Getriebeeinheit möglich. Da es sich bei der Getriebeeinheit insbesondere um ein Getriebe (z.B. Doppelkupplungsgetriebe) mit zwei Windungsgangstufen handelt, das in unterschiedliche Übersetzungen schaltbar ist, bevorzugt sechs Gangstufen schaltbar ist, kann also vorteilhafterweise eine maximale Anzahl an Gangstufen mit einer minimalen Anzahl an Wellen und Zahnrädern in der Getriebeeinheit realisiert werden. Dadurch kann von Vorteil ein minimaler Einbauraum bzw. Bauraum im landwirtschaftlichen Zugfahrzeug und ein optimal konstruktiv einfacher Aufbau der Getriebeeinheit erreicht werden. Vorteilhaft ermöglicht die Getriebeeinheit auch ein Schalten unter Last. Es können außerdem im Vergleich zu Getriebeeinheiten mit einer vergleichbaren Anzahl an Wellen und Zahnrädern zusätzliche Übersetzungen realisiert werden, sodass mit der erfindungsgemäßen Getriebeanordnung eine verbesserte Getriebespreizung und mehr Gangstufen erreicht werden. Außerdem werden höhere Fahrgeschwindigkeiten und geringe Anfahrgeschwindigkeiten ermöglicht, wodurch mit dem Zugfahrzeug Arbeiten mit langsamen Geschwindigkeiten umgesetzt werden können. Die konstruktiv einfache Art und Weise, in welcher die Getriebeeinheit ausgebildet ist, ermöglicht die Einsparung zusätzlicher Zahnradstufen, wodurch wiederum Gewicht und somit Kraftstoffkosten gespart werden. Außerdem ermöglicht der geringere Einbauraum, dass das Zugfahrzeug aufgrund des kürzeren Radabstands wendiger und kompakter wird und/oder der eingesparte Einbauraum für andere Funktionen/Baugruppen verwendet werden kann. Ein weiterer wesentlicher Vorteil sind die kürzeren Radsätze, wodurch kürzere Wellen verwendet werden können. Kürzere Wellen wiederum sorgen für weniger Wellendurchbiegung und somit für eine längere Lager- und Verzahnungslebensdauer.

In Ausgestaltung der Erfindung ist das Schaltelement zwischen einer ersten Schaltstellung, in der das Schaltrad des zweiten Radsatzes und das Schaltrad des dritten Radsatzes gekoppelt sind, und einer zweiten Schaltstellung beweglich, in der das Schaltrad des zweiten Radsatzes und das Schaltrad des dritten Radsatzes voneinander gelöst sind. Dadurch werden vorteilhafterweise die oben genannten Vorteile erreicht.

In einem konstruktiv vorteilhaften Ausführungsbeispiel umfasst die Getriebeeinheit eines oder mehrere Koppelelemente, insbesondere genau zwei Koppelelemente, also beispielsweise ein erstes und ein zweites Koppelelement, wobei die Schalträder mit einem der Koppelelemente mit der Ausgangswelle drehfest und lösbar verbindbar sind, insbesondere jeweils eines der Schalträder mit einem der Koppelelemente mit der Ausgangswelle drehfest und lösbar verbindbar ist.

Das oder die Koppelelemente können drehfest und axial verschiebbar auf der Ausgangswelle gelagert und/oder mittels eines Stellelements bewegbar sein, insbesondere axial bewegbar, und/oder die Koppelelemente sind zwischen jeweils zwei Schalträdern angeordnet, wobei insbesondere die zu den Schalträdern zugehörigen Festräder auf der gleichen Getriebeeingangswelle, also der ersten oder zweiten Getriebeeingangswelle, angeordnet sind.

Die Koppelelemente können in an sich bekannter Form als Klauenkupplungen oder als Stellvorrichtungen, insbesondere Schiebemuffen, und Synchronringe umfassende Schaltpakete bzw. Synchronisierungen ausgebildet sein. In jedem Fall handelt es sich bei den Koppelelementen um drehfest und axial verschieblich auf der Ausgangswelle angeordnete Koppelmittel, mit denen die Schalträder zur Zuschaltung einer Übersetzung drehfest mit der Ausgangswelle verbindbar sind. Die Axialverschiebung der Koppelelemente kann über das Stellelement erfolgen. Dazu kann die Getriebeeinheit entsprechende Stellelemente umfassen oder insbesondere jedes Koppelelement kann jeweils ein Stellelement umfassen.

In Ausgestaltung der Erfindung sind die höchste Gangstufe und die niedrigste Gangstufe als Windungsgangstufe realisiert und/oder die höchste Gangstufe nutzt unter anderem den Radsatz der vorherigen Gangstufe und/oder die niedrigste Gangstufe nutzt unter anderem den Radsatz der nächst höheren Gangstufe. Es sind bei dieser Ausführungsvariante aber auch andere Zuordnungen der Gangstufen in Bezug auf die erste und zweite Kupplung möglich. Insbesondere kann z. B. durch eine Spiegelung eine umgekehrte Zuordnung auf einfachste Weise realisiert werden. Vorteilhafterweise ist mit der Windungsgangstufe in der niedrigsten Gangstufe die Übersetzung ein Produkt aus drei Übersetzungsstufen, wodurch eine größere Übersetzung erzielt werden kann, als nur durch eine Übersetzung durch einen Radsatz. Dadurch wird ein niedrigster Gang mit langsameren Geschwindigkeiten als ohne Windungsgangstufe ermöglicht. Von Vorteil ist weiter, dass zusätzlich in Kombination mit der Windungsgangstufe in der höchsten Gangstufe die Übersetzung ebenfalls ein Produkt aus drei Übersetzungsstufen ist und in der höchsten Gangstufe höhere Geschwindigkeiten erreicht werden können, als ohne Windungsgangstufe. Dadurch wird ein höchster Gang mit höheren Geschwindigkeiten als ohne Windungsgangstufe ermöglicht.

In Ausgestaltung der Erfindung umfasst die Getriebeeinheit sechs Gangstufen, bevorzugt genau nur sechs Gangstufen, besonders bevorzugt genau nur sechs lastschaltbare Gangstufen, und/oder der erste und der sechste Gang, also der niedrigste und höchste Gang, sind als Windungsgangstufe realisiert. Hierdurch wird vorteilhafterweise eine optimale Getriebe-Abstufung erzielt, die für die komplette Bandbreite der Arbeitsbereiche von landwirtschaftlichen Zugfahrzeugen ideal ist.

In einer besonders vorteilhaften Ausgestaltung ist ein Hinterachskegeltrieb mit der Ausgangswelle verbunden, insbesondere drehfest verbunden. Vorteilhafterweise können aufgrund der direkten Verbindung der Ausgangswelle mit dem Hinterachskegeltrieb teure und wartungsanfällige Verbindungselemente, beispielsweise eine Gelenkwelle, eingespart werden. Außerdem ist die Ausgangswelle vorzugsweise mit einer Verzahnung eines Vorderachsantriebs in Verbindung. Dazu kann ein Vorderachsantriebsrad mit der Ausgangswelle in Verbindung stehen, insbesondere mit der Ausgangswelle drehfest verbunden oder wahlweise drehfest verbindbar und lösbar sein. Vorteilhafterweise kann somit der Vorderachsantrieb mit dem Hinterachskegeltrieb mittels der Ausgangswelle verbunden sein kann. Außerdem übernimmt von Vorteil die Ausgangswelle zusätzlich die Funktion der Verbindung einer vorderen und hinteren Fahrzeugachse, wodurch ein weiteres Verbindungselement eingespart werden kann. Ebenso kann die Ausgangswelle mit einem Parksperrenrad in Verbindung stehen.

In Ausgestaltung der Erfindung ist das Ritzel des Hinterachskegeltriebs als Teil der Ausgangswelle ausgebildet, insbesondere in die Ausgangswelle integriert. Vorteilhafterweise kann dadurch eine sehr kompakte Bauweise erreicht, welche Bauraum und Getriebelänge einspart.

Eine vorteilhafte Weiterbildung der Getriebeanordnung sieht vor, dass in der ersten und zweiten Getriebeeingangswelle eine Zapfwellen-Antriebswelle (PTO-Antriebswelle) angeordnet ist. Die Zapfwellen-Antriebswelle kann als Vollwelle ausgeführt sein. Die Getriebeeinheit, insbesondere aber auch die Getriebeanordnung, kann also eine Wellendurchführung für einen Zapfwellenantrieb des landwirtschaftlichen Fahrzeugs aufweisen. Dazu können die erste und zweite Getriebeeingangswelle der Getriebeeinheit als Hohlwelle ausgeführt sein und die Zapfwellen-Antriebswelle zum Antrieb eines Zapfwellengetriebes in sich aufnehmen. Zweckmäßigerweise können auch die erste Kupplung und die zweite Kupplung im Falle ihrer Verwendung an der Eingangsseite der Getriebeeinheit einen zentralen Durchgang für die Zapfwellen-Antriebswelle aufweisen. Auf diese Weise ist eine direkte und damit besonders energieeffiziente Antriebsleistungsübertragung vom Antriebsmotor zu einem Zapfwellenabtrieb des Traktors möglich.

Die Erfindung betrifft weiter ein landwirtschaftliches Zugfahrzeug, bevorzugt ein Traktor oder Schlepper, mit einer Getriebeanordnung nach einem der Ansprüche 1 bis 14. Das landwirtschaftliche Zugfahrzeug kann außerdem einen Antriebsmotor, insbesondere Verbrennungsmotor, umfassen. Dabei kann die Getriebeanordnung vom Antriebsmotor antreibbar sein und mit zumindest einer Fahrzeugachse des Zugfahrzeugs in Antriebsverbindung stehen und/oder kann mit einer weiteren Fahrachse des Zugfahrzeugs in Antriebsverbindung bringbar sein. Das erfindungsgemäße Zugfahrzeug weist die oben beschriebenen Vorteile der erfindungsgemäßen Getriebeanordnung auf.

Die erfindungsgemäße Getriebeanordnung und das erfindungsgemäße Zugfahrzeug ermöglichen eine effiziente Kombination einer leistungsverzweigten Getriebeeinrichtung mit einer nachgelagerten Getriebeeinheit, welche als Volllastschaltgetriebe ausgebildet sein kann. Die im Rahmen der erfindungsgemäßen Getriebeanordnung verwendete Getriebeeinheit weist vorteilhafterweise gegenüber konventionellen Getrieben, insbesondere Lastschaltgetrieben (PST, powershift), wie sie in großen Zugfahrzeugen Anwendung finden, eine deutlich schlankere Bauweise auf und kommt mit weniger Bauraum, sowie Gewicht und rotierender Massenträgheit aus. Die Bauweise ist dadurch kostengünstiger und kraftstoffsparender aufgrund des besseren Wirkungsgrads. Gegenüber diversen Teillastschaltgetrieben (PPST, partial powershift), wie sie in diversen mittleren und kleineren Zugfahrzeugen Anwendung finden, kann hierbei eine Verbesserung der Funktionalität hin zu volllastschaltbaren Getrieben stattfinden. Vorteilhaft kann insbesondere beim Umschalten von einer Gruppe zur nächsten erreicht werden, dass keine Unterbrechung der Zugkraft mehr vorhanden ist und die Arbeit bei voller Last fortgesetzt werden kann, sowohl im Feld als auch im Transport. Dies geschieht mit reduziertem Zusatzgewicht und Bauraumanforderungen, insbesondere verglichen mit konventionellen vollastschaltbaren Getrieben und trotz Erreichen der gleichen Leistungsstärke.

Die erfindungsgemäße Getriebeanordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines erfindungsgemäßen landwirtschaftlichen Zugfahrzeugs, und
- Fig. 2: eine schematische Darstellung eines ersten Ausführungsbeispiels der erfindungsgemäßen Getriebeanordnung, und
- Fig. 3: eine schematische Darstellung eines weiteren Ausführungsbeispiels der erfindungsgemäßen Getriebeanordnung, und
- Fig. 4: eine schematische Darstellung eines weiteren Ausführungsbeispiels der erfindungsgemäßen Getriebeanordnung.

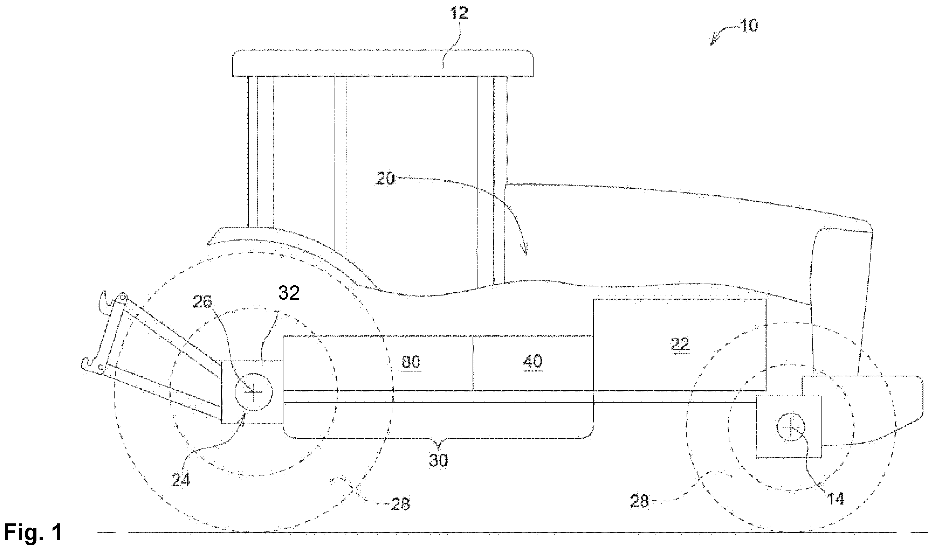

Figur 1 zeigt eine schematische Darstellung eines erfindungsgemäßen landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur, die, wie nachfolgend beschrieben, aus verschiedenen einzelnen Getriebekomponenten zusammengesetzt sein kann. Die vorliegend beschriebene Getriebestruktur kann im Kraft- und Momentenfluss, ausgehend vom Antriebsmotor 22, eine erfindungsgemäße Getriebeanordnung 30, einen Fahrantrieb 24 und ein hinteres Achsgetriebe 32 aufweisen. Die Getriebeanordnung 30 umfasst eine Getriebeeinrichtung 40 und eine Getriebeeinheit 80. Dabei ist die Getriebeeinrichtung 40 dem Antriebsmotor 22 nachgelagert. Die Getriebeeinrichtung 40 ist mit dem Antriebsmotor 22 antriebsverbunden und/oder kann mit dem Antriebsmotor 22 antreibbar sein. Die Getriebeeinheit 80 ist der Getriebeeinrichtung 40 nachgelagert. Dabei ist die Getriebeeinheit 80 mit der Getriebeeinrichtung 40 antriebsverbunden und/oder mit der Getriebeeinrichtung 40 antreibbar.

Mit der gezeigten Getriebeanordnung 30 lässt sich Antriebsleistung des Antriebsmotors 22 mit unterschiedlichen Gangstufen auf eine Ausgangswelle 90 der Getriebeeinheit 80 übertragen. Die mit der Ausgangswelle 90 in Antriebsverbindung stehende hintere Fahrzeugachse 26, welche eine Drehung der vorderen und/oder hinteren Fahrzeugachse (über damit verbundene Bodeneingriffsmittel) in einen Vorschub des Traktors wandelt, wird daher abhängig von einer in der Getriebeanordnung 30 gewählten Gangstufe mit unterschiedlicher Drehzahl angetrieben. Folglich ist ein mit der Getriebeanordnung 30 ausgestatteter Traktor abhängig von der in der Getriebeanordnung 30 gewählten Gangstufe in unterschiedlichen Geschwindigkeitsbereichen bewegbar.

Das Zugfahrzeug 10 kann eines oder mehrere Bodeneingriffsmittel in Form von Rädern 28 aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann außerdem ein Fahrgestell aufweisen, wobei das Fahrgestell insbesondere von den an der vorderen und hinteren Fahrzeugachse 14, 26 aufgehängten Rädern 28 getragen werden kann.

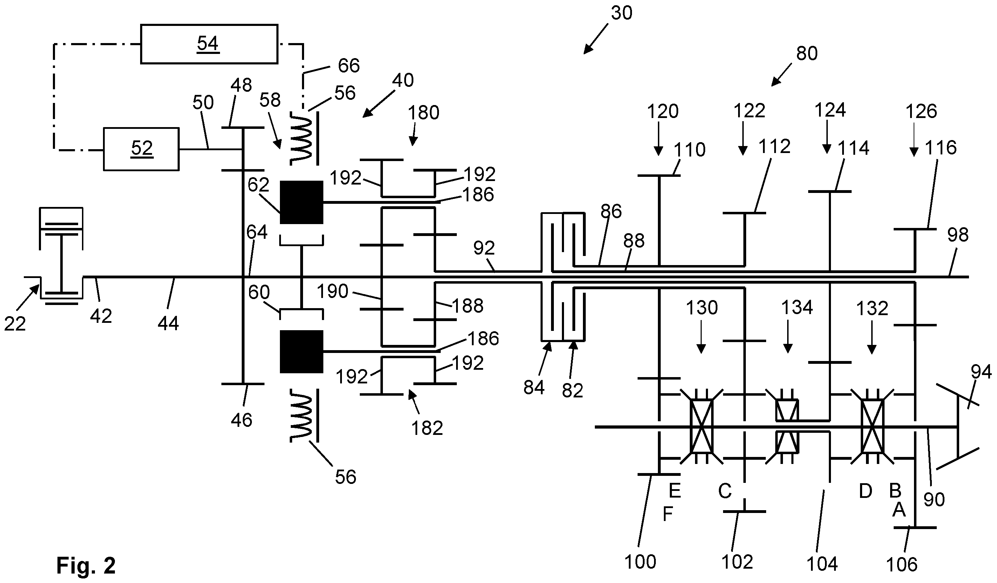

Figur 2 zeigt eine schematische Darstellung, insbesondere ein Strichdiagramm, eines ersten Ausführungsbeispiels der erfindungsgemäßen Getriebeanordnung 30. Die in Figur 2 gezeigte Getriebeanordnung 30 ist eine detaillierte schematische Darstellung der in Figur 1 gezeigten Getriebeanordnung 30. Im Folgenden wird deshalb lediglich auf in Figur 1 nicht gezeigte Details eingegangen. Wie bereits erwähnt, umfasst die Getriebeanordnung 30 die Getriebeeinrichtung 40 und die im Leistungsfluss nachgelagerte Getriebeeinheit 80.

Die Getriebeeinheit 80 umfasst eine erste Getriebeeingangswelle 86 und eine zweite Getriebeeingangswelle 88 und die bereits erwähnte Ausgangswelle 90, insbesondere genau nur eine Ausgangswelle 90. Mit der Ausgangswelle 90 ist ein Hinterachskegeltrieb 94 verbunden. Das Ritzel des Hinterachskegeltriebs 94 kann dabei als Teil der Ausgangswelle 90 ausgebildet sein, insbesondere in die Ausgangswelle 90 integriert sein.

Außerdem sind die erste und/oder zweite Getriebeeingangswelle 86, 88 als Hohlwelle ausgebildet und die zweite Getriebeeingangswelle 88 ist in der ersten Getriebeeingangswelle 86 angeordnet. Darüber hinaus nehmen die erste und/oder zweite Getriebeeingangswelle 86, 88 eine Zapfwellen-Antriebswelle 98 zum Antrieb eines Zapfwellengetriebes in sich auf.

Auf der Ausgangswelle 90 sind vier Schalträder 100, 102, 104, 106 drehbar gelagert. Auf der ersten und zweiten Getriebeeingangswelle 86, 88 sind insgesamt vier Festräder 110, 112, 114, 116 drehfest angeordnet, insbesondere drehfest mit der ersten und zweiten Getriebeeingangswelle 86, 88 verbunden. Dabei sind der ersten und der zweiten Getriebeeingangswelle 86, 88 jeweils zwei Festräder zugeordnet. Diese kämmen jeweils mit einem der Ausgangswelle 90 zugeordneten Schalträdern 100, 102, 104, 106. Die Getriebeeinheit 80 weist mehrere Radsätze, insbesondere vier Radsätze 120, 122, 124, 126, zur Einrichtung von Gangstufen B, C, D, E auf. Dazu weisen mindestens ein erster Radsatz 120 und ein zweiter Radsatz 122 jeweils das Festrad 110, 112 an der ersten Eingangswelle 86 und jeweils das Schaltrad 100, 102 an der Ausgangswelle 90 auf. Außerdem weisen mindestens ein dritter Radsatz 124 und ein vierter Radsatz 126 jeweils das Festrad 114, 116 an der zweiten Eingangswelle 88 und jeweils das Schaltrad 104, 106 an der Ausgangswelle 90 auf. Im Speziellen umfasst der erste Radsatz 120 ein erstes Festrad 110, das mit einem ersten Schaltrad 100 auf der Ausgangswelle 90 kämmt. Der zweite Radsatz 122 umfasst ein zweites Festrad 112, das mit einem zweiten Schaltrad 102 in Eingriff steht. Der dritte Radsatz 124 umfasst ein drittes Festrad 114, das mit einem dritten Schaltrad 104 kämmt. Der vierte Radsatz 126 umfasst ein viertes Festrad 116, das mit einem vierten Schaltrad 106 in Eingriff steht.

Die Dimensionierung der Radsätze 120, 122, 124, 126 ist im Verhältnis zueinander nicht zwangsläufig maßstäblich. Vielmehr können die tatsächlichen Radien der Festräder 110, 112, 114, 116 und der Schalträder 100, 102, 104, 106 anders und in einer für die Getriebeeinheit 80 sowie die Getriebeanordnung 30 geeigneten Weise dimensioniert sein.

Die Getriebeeinheit 80 umfasst weiter genau zwei Koppelelemente 130, 132, also ein erstes Koppelelement 130 und ein zweites Koppelelement 132. Das erste Koppelelement 130 ist zwischen dem ersten und zweiten Radsatz 120, 122 und das zweite Koppelelement 132 ist zwischen dem dritten und vierten Radsatz 124, 126 auf der Ausgangswelle 90 angeordnet. Die Schalträder 100, 102, 104, 106 sind mittels des ersten oder zweiten Koppelelements 130, 132 mit der Ausgangswelle 90 drehfest und lösbar verbindbar. Im Speziellen sind also das erste Schaltrad 100 oder das zweite Schaltrad 102 mittels des ersten Koppelelements 130 mit der Ausgangswelle 90 drehfest und lösbar verbindbar. Außerdem sind das dritte Schaltrad 104 oder das vierte Schaltrad 106 mittels des zweiten Koppelelements 132 mit der Ausgangswelle 90 drehfest und lösbar verbindbar. Somit ist jeweils ein Koppelelement 130, 132 zwischen jeweils zwei Schalträdern 100, 102, 104, 106 angeordnet. Das erste und zweite Koppelelement 130, 132 sind drehfest und axial verschiebbar auf der Ausgangswelle 90 gelagert. Das erste und zweite Koppelelement 130, 132 sind als Schaltpakete ausgebildet, die Stellvorrichtungen, insbesondere Schiebemuffen, und Synchronringe umfassen. Dadurch sind die drehbar gelagerten Schalträder 100, 102, 104, 106 über die Koppelelemente 130, 132 schaltbar, so dass abhängig von einem Schaltzustand der Koppelelemente 130, 132 zwischen der Ausgangswelle 90 und der jeweiligen ersten und/oder zweiten Getriebeeingangswelle 86, 88 jeweils ein festes Drehzahlverhältnis herstellbar ist.

Die Getriebeeinheit 80 umfasst außerdem ein Schaltelement 134 zum Koppeln zweier Schalträder 102, 104. Im Speziellen sind das zweite und dritte Schaltrad 102, 104 mit dem Schaltelement 134 koppelbar. Das zweite und dritte Schaltrad 102, 104 sind mit dem Schaltelement 134 drehfest und lösbar verbindbar. Das zweite und dritte Schaltrad 102, 104 sind mit dem Schaltelement 134 derart koppelbar, insbesondere derart selektiv koppelbar, dass über den zweiten und dritten Radsatz 122, 124 wenigstens eine Windungsgangstufe A, F ausbildbar ist, d. h. insbesondere also die erste und zweite Getriebeeingangswelle 86, 88 miteinander koppelbar sind. Mit anderen Worten, das Schaltelement 134 kann insbesondere zwischen einer ersten Schaltstellung, in der das zweite Schaltrad 102 und das dritte Schaltrad 104 gekoppelt sind, und einer zweiten Schaltstellung beweglich sein, in der das zweite Schaltrad 102 und das dritte Schaltrad 104 voneinander gelöst sind. Das Schaltelement 134 ist als eine einseitig wirkende Synchronisierung ausgebildet. Das Schaltelement 134 ist zwischen dem ersten und zweiten Koppelelement 130, 132 entlang der Ausgangswelle 90 angeordnet.

Abhängig vom Zustand, insbesondere dem Schaltzustand, zweier Kupplungen 82, 84 sowie vom Schaltzustand des ersten und zweiten Koppelelements 130, 132 und des Schaltelements 134 kann die Getriebeeinheit 80 mit jeder der Getriebeeingangswellen 86, 88 in jeweils zwei Gangstufen, also insgesamt vier Gangstufen B, C, D, E, und jeweils eine zusätzliche Gangstufe als Windungsgangstufe A, F, also insgesamt zwei Windungsgangstufen A, F, und somit in insgesamt sechs Gangstufen bzw. Gruppengangstufen geschaltet werden. Dabei kann die Getriebeeinheit 80 geschaltet werden, indem im Synchronpunkt der beiden Getriebeeingangswellen 86, 88 das Schaltelement 134 sowie das erste und zweite Koppelelement 130, 132 entsprechend betätigt, insbesondere aktuiert werden, und der Kraftfluss und das Drehmoment in der Koppeleinrichtung 180 somit automatisch auf den neuen geschalteten Pfad umgeleitet wird. Zur Wahl einer gewünschten Gangstufe wird das betreffende Schaltrad, also insbesondere das erste bis vierte Schaltrad 100, 102, 104, 106, durch das jeweils zugeordnete erste oder zweite Koppelelement 130, 132 drehfest mit der Ausgangswelle 90 verbunden, sodass die Gangstufen B, C, D, E realisiert werden. Falls eine Gangstufe A, F als Windungsgangstufe geschaltet wird, werden das zweite und dritte Schaltrad 102, 104 durch das Schaltelement 134 drehfest miteinander verbunden und gleichzeitig die Gangstufe E oder B aktiviert, also gleichzeitig das erste Schaltrad 100 durch das erste Koppelelement 130 (Gangstufe E) oder das vierte Schaltrad 106 durch das zweite Koppelelement 132 mit der Ausgangswelle 90 (Gangstufe B) verbunden. Somit läuft jede Windungsgangstufe über drei Radsätze. Die Getriebeeinheit 80 umfasst also sechs Gangstufen, die insbesondere lastschaltbar sind. Im Speziellen sind die erste und die sechste Gangstufe A, F ein Windungsgang, also als Windungsgangstufe realisiert.

Die Getriebeanordnung 30 umfasst im Wesentlichen zwei Funktionsgruppen 40, 80, die über die Koppeleinrichtung 180 miteinander in Antriebsverbindung stehen. Eingangsseitig der Getriebeanordnung 30 ist die Getriebeeinrichtung 40 angeordnet. Die Getriebeeinrichtung 40 kann in Antriebsverbindung mit dem Antriebsmotor 22 stehen und vom Antriebsmotor 22 antreibbar sein. Die Getriebeeinheit 80 weist ausgangsseitig die Ausgangswelle 90 auf, die zugleich Abtriebswelle der Getriebeanordnung 30 ist.

Eine Motorabtriebswelle 42 am Verbrennungsmotor 22 ist entlang des Leistungsflusses insbesondere drehfest verlängert und bildet in dieser Verlängerung eine Eingangswelle 44 für die Getriebeanordnung 30. Die Eingangswelle 44 kann die Zapfwellen-Antriebswelle 98 mit Antriebsleistung versorgen und ist hierzu in Axialrichtung als durchgehende Welle ausgebildet.

An der Eingangswelle 44 ist ein Antriebsrad 46 drehfest angeordnet, welches mit einem weiteren Antriebsrad 48 kämmt. Das Antriebsrad 48 ist drehfest an einer Antriebswelle 50 angeordnet, welche in einer, insbesondere lösbaren, Antriebsverbindung mit einer Elektromaschine 52 steht. Dadurch können der Verbrennungsmotor 22 und die Elektromaschine 52 in einem konstanten Drehzahlverhältnis stehen. Solange die Elektromaschine 52 mit der Eingangswelle 44 in Antriebsverbindung steht, wird anteilig mechanische Energie bzw. Leistung des Verbrennungsmotors in elektrische Energie bzw. Leistung umgewandelt. Der verbleibende mechanische Anteil in der Eingangswelle 44 wird durch diese weitergeleitet. Von der Elektromaschine 52 generierte elektrische Leistung kann von einer Getriebesteuereinheit 54 gesteuert variabel an einen Stator 56 einer magnetisch-elektrischen Umlaufgetriebestufe 58 übertragen werden. Die Getriebesteuereinheit 54 kann mit einer Leistungselektronik und/oder einer Batterieeinheit kombiniert sein oder eine solche Leistungselektronik und/oder Batterieeinheit umfassen. Abhängig vom Leistungsbedarf am Stator 56 kann die elektrische Leistung der Elektromaschine 52 zunächst zwischengespeichert werden oder direkt an den Stator 56 weitergeleitet werden.

Die magnetisch-elektrische Umlaufgetriebestufe 58 weist den äußeren Stator 56, einen inneren Rotor 60 und dazwischen einen rotierbaren Modulationsring 62. Der Modulationsring umfasst nicht magnetische und ferromagnetische Segmente, die insbesondere abwechselnd angeordnet sind. Der innere Rotor 60 ist drehfest mit der Eingangswelle 44 verbunden. Der Modulationsring 62 ist mit einem Planetenradträger 186 des Planetengetriebes 182 der Koppeleinrichtung 180 drehfest verbunden. Ein erstes Sonnenrad 190 des Planetengetriebes 182 ist mit dem Rotor 60 drehfest verbunden. Dabei sind das erste Sonnenrad 190 und der Rotor 60 insbesondere an der Eingangswelle 44 oder an einer Verlängerung derselben drehfest angeordnet. Ein zweites Sonnenrad 188 des Planetengetriebes 182 ist mit einer Kupplungsantriebswelle 92 an der Eingangsseite der beiden Kupplungen 82, 84 drehfest verbunden. Die Kupplungsantriebswelle 92 treibt die beiden Kupplungen 82, 84 eingangsseitig an. Der Planetenradträger 186 trägt Planetenräder 192 des Planetengetriebes 182. Die Verbindung zwischen dem zweiten Sonnenrad 188 und der Kupplungsantriebswelle 92 bildet den einzigen Ausgang der Koppeleinrichtung 180 in Richtung der Getriebeeinheit 80.

Die Ausgangsseite der ersten Kupplung 82 ist mit der ersten Getriebeeingangswelle 86 verbunden, insbesondere ist die erste Kupplung 82 mit der ersten Getriebeeingangswelle 86 drehfest verbunden. Die Ausgangsseite der zweiten Kupplung 84 ist mit der zweiten Getriebeeingangswelle 88 verbunden, insbesondere ist die zweite Kupplung 84 mit der zweiten Getriebeeingangswelle 88 drehfest verbunden. Die erste und zweite Kupplung 82, 84 sind zwischen einem geöffneten Zustand, in dem das zweite Sonnenrad 188 von der ersten bzw. zweiten Getriebeeingangswelle 86, 88 antriebsmäßig gelöst ist, und einem geschlossenen Zustand beweglich oder schaltbar, in dem das zweite Sonnenrad 188 mit der ersten bzw. zweiten Getriebeeingangswelle 86, 88 in Antriebsverbindung steht.

Abhängig vom Schaltzustand der ersten und zweiten Kupplung 82, 84 sowie vom Schaltzustand des ersten und zweiten Koppelelements 130, 132 und des Schaltelements 134 kann die Getriebeeinheit 80 mit jede der Kupplungen 82, 84 in jeweils zwei Gangstufen, also insgesamt vier Gangstufen B, C, D, E, und jeweils eine zusätzliche Gangstufe als Windungsgangstufe A,F, also insgesamt zwei Windungsgangstufen A, F, und somit in insgesamt sechs Gangstufen bzw. Gruppengangstufen geschaltet werden. Dabei kann die Getriebeeinheit 80 unter Last geschaltet werden, indem während des Öffnens der einen Kupplung, beispielsweise der ersten Kupplung 82, die andere Kupplung, beispielsweise die zweite Kupplung 84, geschlossen wird, so dass eine zwischen der ersten oder zweiten Getriebeeingangswelle 86, 88 und der Koppeleinrichtung 180 bestehende Antriebsverbindung durch eine über die jeweils andere Getriebeeingangswelle 86, 88 herzustellende Antriebsverbindung ersetzbar ist, ohne eine Antriebsverbindung zwischen der ersten oder zweiten Getriebeeingangswelle 86, 88 und Ausgangswelle 90 zu unterbrechen.

Der Aufbau der Getriebeeinrichtung 40 ist leistungsverzweigt mit einem mechanischen Getriebezweig 64 im Bereich der durchgehenden Eingangswelle 44 und mit einem elektrischen bzw. variablen Getriebezweig 66, welcher die magnetisch-elektrische Umlaufgetriebestufe 58 umfasst. Sowohl der rotierende Rotor 60 als auch der elektrisch angesteuerte Stator 56 beeinflussen die Rotation des Modulationsringes 62. Hierdurch kann variabel eine abgehende Drehzahl und ein abgehendes Drehmoment am Modulationsring 62 eingestellt werden. Die Drehzahl bzw. die Antriebsleistung an dem Modulationsring 62 kann angepasst werden, indem durch die Getriebesteuereinheit 54 eine Änderung der Erregerfrequenz der Wicklung(en) am äußeren Stator 56 erfolgt. Bei dieser Änderung entsteht im Wesentlichen kein Trägheitsmoment, so dass eine Veränderung des Trägheitsmoments der Getriebeanordnung 30 sehr klein gehalten wird und Geschwindigkeitsänderungen während der Schaltvorgänge nicht mehr wahrnehmbar sind. Die trägheitslose Drehzahländerung an dem Modulationsring trägt dazu bei, einen harmonischen ruckfreien Betrieb während der Schaltvorgänge zu erreichen.

Die variable Einstellung des rotierbaren Modulationsringes 62 durch die Getriebesteuereinheit 54 ermöglicht auch eine Drehrichtungsumkehr des Modulationsringes 62. Mit anderen Worten ist der Stator 56 zur Erzielung einer zur Drehrichtung der Eingangswelle 44 entgegengesetzten Drehrichtung der Ausgangswelle 90 ansteuerbar, so dass durch die Umlaufgetriebestufe 58 ein Vorwärts- und Rückwärtsbetrieb der Getriebeanordnung 30 möglich ist.

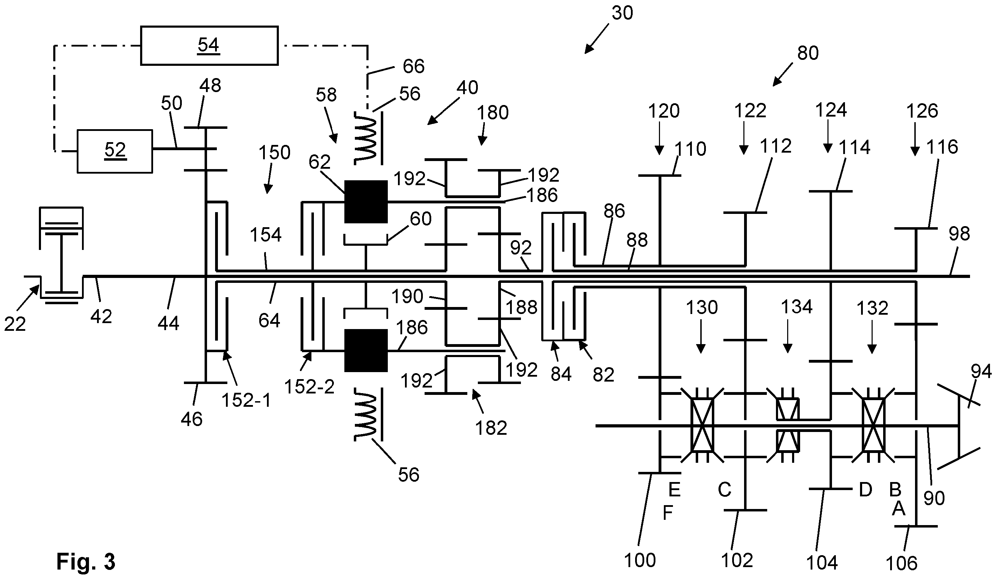

Figur 3 zeigt eine schematische Darstellung, insbesondere ein Strichdiagramm, eines weiteren Ausführungsbeispiels der erfindungsgemäßen Getriebeanordnung 30. Die Getriebeeinheit 80 entspricht hier im Wesentlichen der in Figur 2 gezeigten Getriebeeinheit 80, so dass im Folgenden lediglich auf Details und/oder Unterschiede in der Getriebeeinrichtung 40 eingegangen wird. In Figur 3 ist zwischen der Eingangswelle 44 und der elektrisch-magnetischen Umlaufgetriebestufe 58 ein Anfahrmodul 150 zum elektrischen Anfahren angeordnet. Zu diesem Zweck weist das Anfahrmodul 150 eine erste Kupplungseinheit 152-1 und eine zweite Kupplungseinheit 152-2 auf. Die erste Kupplungseinheit 152-1 ist antriebsseitig mit der Eingangswelle 44 drehfest verbunden und abtriebsseitig über eine als Hohlwelle ausgebildete Rotorantriebswelle 154 mit dem Rotor 60 der Umlaufgetriebestufe 58 drehfest verbunden. An der Rotorantriebswelle 154 oder an einer Verlängerung derselben sind der Rotor 60 und das erste Sonnenrad 190 des Planetengetriebes 182 der Koppeleinrichtung 180 drehfest miteinander verbunden angeordnet. Die zweite Kupplungseinheit 152-2 ist entlang des Leistungsflusses einerseits mit der Rotorantriebswelle 154 drehfest verbunden und andererseits mit dem Modulationsring 62 drehfest verbunden.

Mit der ersten Kupplungseinheit 152-1 kann wahlweise eine Kopplung und Entkopplung der, insbesondere mechanischen, Antriebsverbindung zwischen der Eingangswelle 44 und der Umlaufgetriebestufe 58 realisiert werden. In einem geschlossenen Zustand der ersten Kupplungseinheit 152-1 sind die Eingangswelle 44 und der Rotor 60 über die Rotorantriebswelle 154 miteinander in Antriebsverbindung, so dass der mechanische Getriebezweig 64 für den Modulationsring 62 wirksam ist.

Bei dem in Figur 3 dargestellten geöffneten Zustand der ersten Kupplungseinheit 152-1 ist der Modulationsring 62 von dem mechanischen Getriebezweig 64 entkoppelt, was ein rein elektrisches Anfahren über den variablen Getriebezweig 66 ermöglicht. Hierbei wird durch die Getriebesteuereinheit 54 und/oder über eine Batterieeinheit elektrische Energie an den Stator 56 übertragen. Insbesondere wird dabei auch ein konstantes Drehzahlverhältnis zwischen dem Rotor 60 und dem Modulationsring 62 hergestellt. Dies wird durch eine entsprechende Ansteuerung der zweiten Kupplungseinheit 152-2 erreicht. Das elektrische Anfahren ist besonders vorteilhaft bei hohen Anhängelasten, die bei geringen Fahrgeschwindigkeiten üblicherweise eine starke Untersetzung erfordern, um anzufahren.

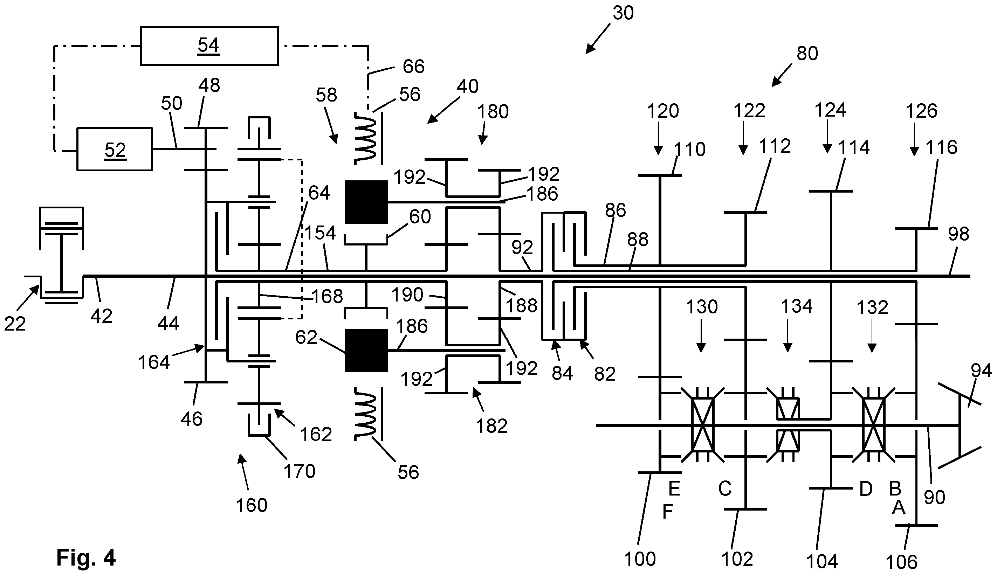

Figur 4 zeigt eine schematische Darstellung, insbesondere ein Strichdiagramm, eines weiteren Ausführungsbeispiels der erfindungsgemäßen Getriebeanordnung 30. Sie unterscheidet sich von der Getriebeanordnung 30 gemäß Figur 3 im Wesentlichen dadurch, dass in der Getriebeeinrichtung 40 anstatt des Anfahrmoduls 150 eine Getriebestufe 160 zur Drehrichtungsumkehr integriert ist. Die Getriebestufe 160 ist in Figur 4 zwischen der Eingangswelle 44 und der Umlaufgetriebestufe 58 angeordnet.

Die Getriebestufe 160 weist ein Planetengetriebe 162 sowie eine dem Planetengetriebe 162 vorgelagerte Kupplungseinrichtung 164 auf. Dabei ist die Kupplungseinrichtung 164 antriebsseitig mit der Eingangswelle 44 drehfest verbunden ist und abtriebsseitig über die Rotorantriebswelle 154 mit dem Rotor 60 der Umlaufgetriebestufe 58 drehfest verbunden. Durch Betätigen der Kupplungseinrichtung 164 zwischen einem geöffneten und einem geschlossenen Zustand und/oder Betätigen einer Bremsvorrichtung 170 am Planetengetriebe 162 kann die Drehrichtung der Getriebeeingangswellen 86, 88 umgekehrt im Vergleich zur Drehrichtung der Eingangswelle 44 ausgerichtet und somit ein Vorwärts- und Rückwärtsbetrieb der Getriebeanordnung 30 bereitgestellt werden. Insbesondere kann ein Drehrichtungswechsel des magnetischen Rotors 60 einen Drehrichtungswechsel des Modulationsringes 62 und somit auch der Getriebeeingangswellen 86, 88 generieren oder unterstützen.

In einer hier nicht dargestellten weiteren bevorzugten Ausführungsform kann die Getriebeeinrichtung 40 gemäß Figur 4 mit der zweiten Kupplungseinheit 152-2 gemäß Figur 3 ergänzt sein. Diese zweite Kupplungseinheit 152-2 hat dann in Figur 4 bezüglich der Rotorantriebswelle 154 und des Modulationsringes 62 prinzipiell dieselbe Relativanordnung wie bei der Ausführungsform gemäß Figur 3. Diese zweite Kupplungseinheit 152-2 bildet dann in Figur 4 gemeinsam mit der Kupplungseinrichtung 164 die Funktionalität des Anfahrmoduls 150 gemäß Figur 3. Hierdurch bekommt die Kupplungseinrichtung 164 gemäß Figur 4 eine Doppelfunktion und kann bauteilesparend zur Realisierung der Funktionalität eines Anfahrmoduls 150 bei der Getriebeeinrichtung 40 gemäß Figur 4 beitragen.

## Patentansprüche

1. Getriebeanordnung (30) für einen Antriebsstrang (20) eines landwirtschaftlichen Zugfahrzeugs (10), mit einer Eingangswelle (44), einer Ausgangswelle (90), einer Getriebeeinrichtung (40) und einer im Leistungsfluss nachgelagerten Getriebeeinheit (80), welche eine erste Kupplung (82) und eine zweite Kupplung (84) mit antreibbarer Eingangsseite (92) aufweist, wobei die erste Kupplung (82) mit einer ersten Getriebeeingangswelle (86) drehfest verbunden ist und die zweite Kupplung (84) mit einer zweiten Getriebeeingangswelle (88) drehfest verbunden ist,
**dadurch gekennzeichnet, dass**
die Getriebeeinrichtung (40) einen mechanischen Getriebezweig (64) und einen variablen Getriebezweig (66) umfasst mit einer magnetisch-elektrischen Umlaufgetriebestufe (58) aufweisend einen inneren Rotor (60), einen äußeren Stator (56) und dazwischen einen rotierbaren Modulationsring (62), wobei
- elektrische Leistung einer mit der Eingangswelle (44) gekoppelten Elektromaschine (52) an den Stator (56) der Umlaufgetriebestufe (58) übertragbar ist,
- der Stator (56) der Umlaufgetriebestufe (58) zur Erzielung einer Rotation des Modulationsringes (62) ansteuerbar ist, und
- zwischen dem Modulationsring (62) und der Eingangsseite (92) der beiden Kupplungen (82, 84) eine Koppeleinrichtung (180) mit einem Planetengetriebe (182) angeordnet ist derart, dass der Modulationsring (62) mit einem Planetenradträger (186) des Planetengetriebes (182) drehfest verbunden ist, dass ein erstes Sonnenrad (190) des Planetengetriebes (182) mit dem inneren Rotor (60) drehfest verbunden ist, und dass ein zweites Sonnenrad (188) des Planetengetriebes (182) mit der Eingangsseite (92) beider Kupplungen (82, 84) drehfest verbunden ist, wobei die drehfeste Verbindung des zweiten Sonnenrads (188) mit der Eingangsseite (92) beider Kupplungen (82, 84) als ein einziger Ausgang der Koppeleinrichtung (180) wirksam ist.

2. Getriebeanordnung nach Anspruch 1, **dadurch gekennzeichnet, dass**
- das erste Sonnenrad (190) des Planetengetriebes (182) und der innere Rotor (60) an einer Welle (44, 154) drehfest angeordnet sind, und/oder
- der Planetenradträger (186) Planetenräder (192) des Planetengetriebes (182) trägt, und/oder
- das zweite Sonnenrad (188) des Planetengetriebes (182) mit einer Kupplungsantriebswelle (92) drehfest verbunden ist, welche die beiden Kupplungen (82, 84) eingangsseitig antreibt.

3. Getriebeanordnung nach Anspruch 1 oder 2, **dadurch gekennzeichnet, dass** eine Getriebestufe (160) zur Drehrichtungsumkehr zwischen der Eingangswelle (44) und der magnetisch-elektrischen Umlaufgetriebestufe (58) angeordnet ist.

4. Getriebeanordnung nach Anspruch 3, **dadurch gekennzeichnet, dass** die Getriebestufe (160) zur Drehrichtungsumkehr ein Planetengetriebe (162) aufweist.

5. Getriebeanordnung nach Anspruch 4, **dadurch gekennzeichnet, dass** die Getriebestufe (160) zur Drehrichtungsumkehr eine dem Planetengetriebe (162) vorgelagerte Kupplungseinrichtung (164) aufweist.

6. Getriebeanordnung nach einem der vorhergehenden Ansprüche, **dadurch gekennzeichnet, dass** zwischen der Eingangswelle (44) und der magnetisch-elektrischen Umlaufgetriebestufe (58) ein Anfahrmodul (150) zum elektrischen Anfahren angeordnet ist, welches zur wahlweisen Kopplung und Entkopplung einer Antriebsverbindung zwischen der Eingangswelle (44) und/oder der Elektromaschine (52) einerseits und der magnetisch-elektrischen Umlaufgetriebestufe (58) andererseits ausgebildet ist.

7. Getriebeanordnung nach Anspruch 6, **dadurch gekennzeichnet, dass** das Anfahrmodul (150)
- eine Kupplungseinheit (152-1) aufweist, welche antriebsseitig mit der Eingangswelle (44) und/oder der Elektromaschine (52) antriebsverbunden ist und abtriebsseitig über eine Rotorantriebswelle (154) mit dem inneren Rotor (60) der magnetisch-elektrischen Umlaufgetriebestufe (58) drehfest verbunden ist, und/oder
- eine Kupplungseinheit (152-2) aufweist, welche entlang des Leistungsflusses einerseits über eine Rotorantriebswelle (154) mit dem inneren Rotor (60) der magnetisch-elektrischen Umlaufgetriebestufe (58) drehfest verbunden ist und andererseits mit dem Modulationsring (62) drehfest verbunden ist.

8. Getriebeanordnung nach einem der Ansprüche 3 bis 7, **dadurch gekennzeichnet, dass** die antriebsseitig mit der Eingangswelle (44) und/oder der Elektromaschine (52) antriebsverbundene Kupplungseinheit (152-1) des Anfahrmoduls (150) als die Kupplungseinrichtung (164) wirksam ist, welche Bestandteil der zwischen der Eingangswelle (44) und der magnetisch-elektrischen Umlaufgetriebestufe (58) angeordneten Getriebestufe (160) zur Drehrichtungsumkehr ist.

9. Getriebeanordnung nach einem der vorhergehenden Ansprüche, **dadurch gekennzeichnet, dass**
- die Getriebeeinheit (80) mindestens vier Radsätze (120, 122, 124, 126) zur Einrichtung von Gangstufen (B, C, D, E) aufweist, und
- Festräder (110, 112, 114, 116) der Radsätze (120, 122, 124, 126) an der ersten Getriebeeingangswelle (86) und der zweiten Getriebeeingangswelle (88) drehfest angeordnet sind.

10. Getriebeanordnung nach Anspruch 9, **dadurch gekennzeichnet, dass**
- auf der Ausgangswelle (90) Schalträder (100, 102, 104, 106) der Radsätze (120, 122, 124, 126) drehbar gelagert sind,
- ein erster Radsatz (120) und ein zweiter Radsatz (122) jeweils das Festrad (110, 112) an der ersten Getriebeeingangswelle (86) und jeweils das Schaltrad (100, 102) an der Ausgangswelle (90) aufweisen, und
- ein dritter Radsatz (124) und ein vierter Radsatz (126) jeweils das Festrad (114, 116) an der zweiten Getriebeeingangswelle (88) und jeweils das Schaltrad (104, 106) an der Ausgangswelle (90) aufweisen.

11. Getriebeanordnung nach Anspruch 10, **dadurch gekennzeichnet, dass** ein Schaltelement (134) zum Koppeln zweier Schalträder (102, 104) vorgesehen ist, wobei das Schaltrad (102) des zweiten Radsatzes (122) und das Schaltrad (104) des dritten Radsatzes (124) mit dem Schaltelement (134) derart koppelbar sind, insbesondere derart selektiv koppelbar sind, dass über den zweiten und dritten Radsatz (122, 124) wenigstens eine Windungsgangstufe (A, F) ausbildbar ist.

12. Getriebeanordnung nach Anspruch 11, **dadurch gekennzeichnet, dass** das Schaltelement (134) zwischen einer ersten Schaltstellung, in der das Schaltrad (102) des zweiten Radsatzes (122) und das Schaltrad (104) des dritten Radsatzes (124) gekoppelt sind, und einer zweiten Schaltstellung beweglich ist, in der das Schaltrad (102) des zweiten Radsatzes (122) und das Schaltrad (104) des dritten Radsatzes (124) voneinander gelöst sind.

13. Getriebeanordnung nach einem der Ansprüche 10 bis 12, **dadurch gekennzeichnet, dass** die Getriebeeinheit (80) eines oder mehrere Koppelelemente (130, 132) umfasst, wobei die Schalträder (100, 102, 104, 106) mit einem der Koppelelemente (130, 132) mit der Ausgangswelle (90) drehfest und lösbar verbindbar sind.

14. Getriebeanordnung nach einem der vorhergehenden Ansprüche, **dadurch gekennzeichnet, dass** die Getriebeeinheit (80) sechs Gangstufen (A, B, C, D, E, F) umfasst und/oder der erste und der sechste Gang als Windungsgangstufe (A, F) realisiert sind.

15. Landwirtschaftliches Zugfahrzeug (10) mit einer Getriebeanordnung (30) nach einem der Ansprüche 1 bis 14.
